# EUROPEAN PATENT SPECIFICATION

(11) **EP 1 589 468 B1**
(45) Date of publication and mention of the grant of the patent: **01.12.2010**
(21) Application number: 05252419.6
(22) Date of filing: 19.04.2005
(51) Int. Cl.: G06K 15/10, B41J 2/05, B41J 2/21

(54) **Printing system and program therefor**
Druckersystem und Druckprogramm hierzu
Système d'impression et programme correspondant

(30) Priority: 19.04.2004 JP 2004123295
(43) Date of publication of application: 26.10.2005
(73) Proprietor: Brother Kogyo Kabushiki Kaisha, Nagoya-shi, Aichi-ken 467-8561 (JP)
(72) Inventor: Tobita, Manabu, Brother Kogyo KK, Mizuho-ku Nagoya-shi, Aichi-ken 467-8562 (JP)
(74) Representative: Smith, Samuel Leonard

(56) References cited:
- EP-A- 0 645 247
- EP-A- 0 864 424
- EP-A- 1 258 367
- GB-A- 2 334 124

## Description

### BACKGROUND OF THE INVENTION

### 1. Field of the Invention

The present invention relates to a printing system including a printer and a host computer, and a computer program that is used in the printing system.

### 2. Description of the Related Art

Conventional inkjet printers include a print head having a plurality of nozzles and form images by ejecting ink droplets from these nozzles. However, when ink droplets are not ejected from certain nozzles for a certain period of time, the nozzles become dry, increasing the viscosity of the ink in the nozzles. When this happens, there is a danger that the nozzles will become clogged or that, even if the nozzles do not become clogged, that the next ink droplet ejected from the nozzles will not be produced at the intended droplet size.

Various technologies have been proposed to resolve these issues. Japanese unexamined patent application publication 11-314360 discloses a print head driving circuit including a counter for counting the number of times that each nozzle has not ejected ink droplets in succession (non-ejection times) and for applying a micro-signal to the actuator corresponding to nozzles for which the number of non-ejection times has reached a prescribed number, thereby vibrating ink near the opening of the nozzle to the extent that an ink droplet is not ejected. Using a similar method, Japanese unexamined patent application publication 10-315455 discloses a technology for detecting nozzles for which the number of non-ejection times has reached a prescribed number and for applying a different drive waveform than normal to these nozzles when ejecting the next ink droplet, obtaining the desired ink density, even when ink in the nozzle opening has dried and the ink viscosity has increased.

However, in the technologies described above, counters are provided for each nozzle in order to count the number of consecutive times that ink droplets are not ejected for each nozzle, thereby requiring a number of counters equivalent to the number of nozzles. Hence, a large number of counters is necessary for high-resolution printers provided with a large number of nozzles, resulting in a larger construction of the printer itself as the number of counters grows.

EP-A-0 645 247 aims to prevent blurring of different colours of ink on a recording medium. It discloses an ink jet recording apparatus for ejecting ink droplets onto the recording medium to record an image including a plurality of recording heads, each having a plurality of ejecting ports and ejecting different inks; data storage means for storing printing data and non printing data for each of the recording heads; boundary detecting means for detecting a boundary between the printing data and the non printing data of one of the recording heads in accordance with the printing data stored in the storage means; judging means for judging whether printing data of other heads continues for more than a predetermined number of dots at the boundary detected by the boundary detecting means; and thinning means for converting some of the printing data of the other heads to non printing data when the judging means determines that the printing data of the other heads continues for more than the predetermined number of dots.

### SUMMARY OF THE INVENTION

In view of the foregoing, it is an object of the present invention to provide a printing system that does not necessitate a larger printer as the number of nozzles increases.

The present invention provides a printing system as defined in appended claim 1.

The present invention further provides a printer as defined in appended claim 4.

The present invention still further provides a computer readable medium as defined in appended claim 6.

### BRIEF DESCRIPTION OF THE DRAWINGS

The above and other objects, features, and advantages of the invention will become more apparent from reading the following description of the preferred embodiments taken in connection with the accompanying drawings in which:
Fig. 1 is a block diagram showing the overall structure of a printing system according to a preferred embodiment;
Fig. 2 is a side cross-sectional view the internal structure of the printer according to the preferred embodiment;
Fig. 3 is an explanatory diagram showing a print head in the printer;
Fig. 4 is a flowchart illustrating a process for transmitting print data;
Fig. 5 is a flowchart illustrating detailed steps of the process for transmitting print data;
Fig. 6 is flowchart illustrating an image generating process;
Fig. 7 is a flowchart illustrating detailed steps of the image generating process;
Fig. 8 is a table of ink droplet data;
Fig. 9 is a time chart illustrating waveforms of drive signals used to drive the actuator-in the print head;
Fig. 10 is an explanatory diagram showing the format in which print data generated by the host computer is developed in the image buffer of the printer; and
Fig. 11 is a block diagram showing a printer according to another preferred embodiment of the present invention.

### DESCRIPTION OF THE PREFERRED EMBODIMENTS

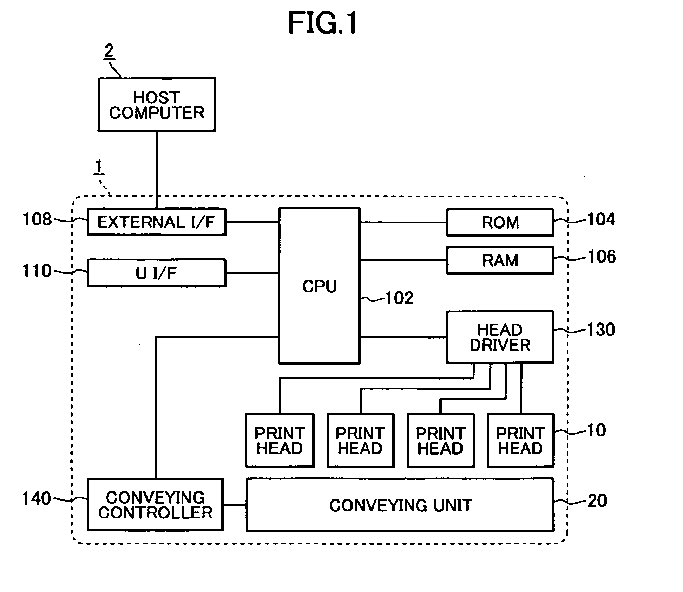

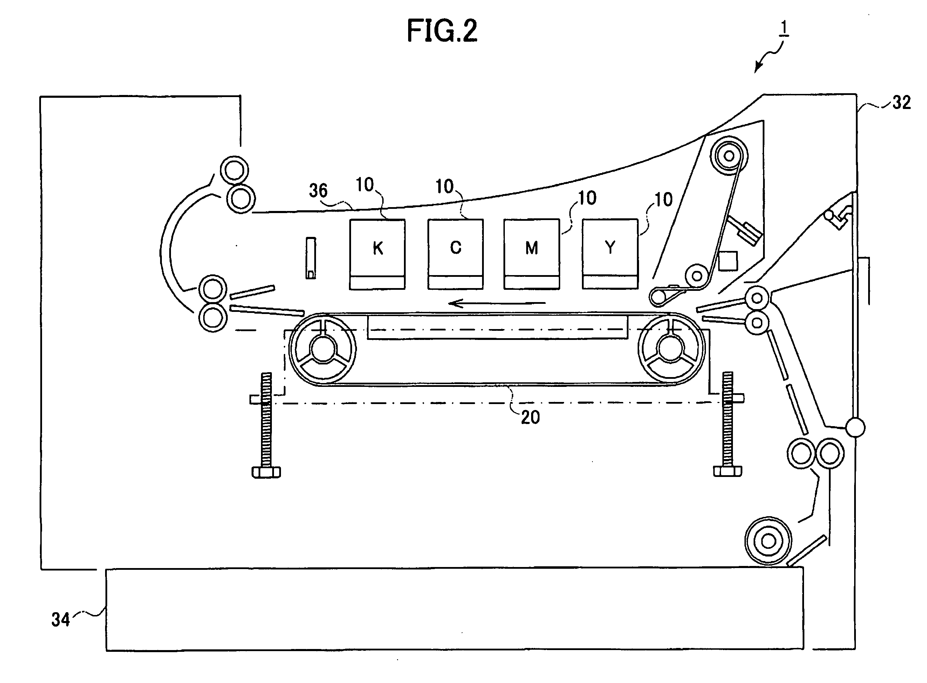

A printing system according to a preferred embodiment of the present invention will be described while referring to the accompanying drawings. Referring to Fig. 1, the printing system includes a printer 1, and a host computer 2 that is connected to and capable- of performing data communications with the printer 1. Fig. 2 shows a basic internal structure of the printer 1.

As shown in Fig. 2, the printer 1 is a line head type color inkjet printer and includes four print heads 10 capable of ejecting ink droplets of different colors, a conveying unit 20 for conveying a recording paper so as to pass beneath the print head 10 and along a nozzle surface thereof, a casing 32 in which the print heads 10 and conveying unit 20 are accommodated, a paper tray 34 disposed in the bottom section of the casing 32, and a discharge tray 36 provided on the top of the casing 32.

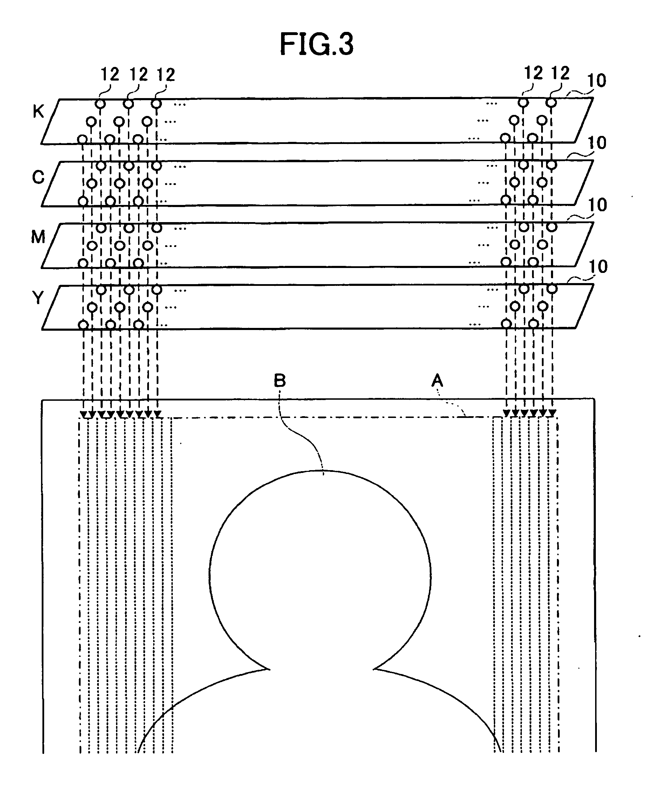

The print heads 10 are provided one for each color of ink. In the preferred embodiment, the printer 1 has the four colors cyan (C), magenta (M), yellow (Y), and black (K), as specified by the CMYK color model. The print heads 10 are arranged side by side in the direction for conveying the recording paper, indicated by the arrow in Fig. 2 (hereinafter referred to as the "paper conveying direction"). As shown in Fig. 3, each print head 10 includes a plurality of nozzles 12 formed in the nozzle surface of the print head 10 that opposes the conveying unit 20. The nozzles 12 are arranged in a plurality of rows extending in a direction (left-to-right in Fig. 3) orthogonal to the paper conveying direction. Each print head 10 is also provided with pressure chambers (not shown) communicated to each nozzle 12 via ink channels, and actuators that apply pressure to the ink in these pressure chambers, forcing ink in the pressure chambers to the nozzles 12 via the ink channels and causing ink droplets to be ejected from the nozzles 12.

In the printer 1 having the above construction, recording paper is supplied from the paper tray 34 and conveyed in the paper conveying direction by the conveying unit 20. The paper passes through a gap formed between the nozzle surfaces of the print heads 10 and the top surface of the conveying unit 20. As the recording paper passes through the gap, the print head 10 ejects suitable ink droplets from the nozzles 12 in order to form an image B on the surface of the recording paper within a range A that passes through regions opposing the print heads 10. After the image B has been formed within the image forming range A, the recording paper is discharged onto the discharge tray 36.

As shown in Fig. 1, a control system of the printer 1 is configured of a CPU 102 for controlling overall operations of the printer 1, a ROM 104 for storing processing programs performed by the CPU 102, a RAM 106 for storing results of processes performed by the CPU 102, an external interface 108 for enabling connection to the host computer 2 via a cable, a user interface 110 including a control panel and display panel, a print head driver 130 for applying drive signals to the actuators in the print heads 10, and a conveying controller 140 for controlling how the conveying unit 20 conveys the recording paper.

The host computer 2 is a computer system well known in the art that includes a CPU, ROM, RAM, external interface, hard disk drive, keyboard, and display (not shown). In addition to various application programs, the host computer 2 is provided with a device driver for generating print data based on image data and transmitting the print data to the printer 1.

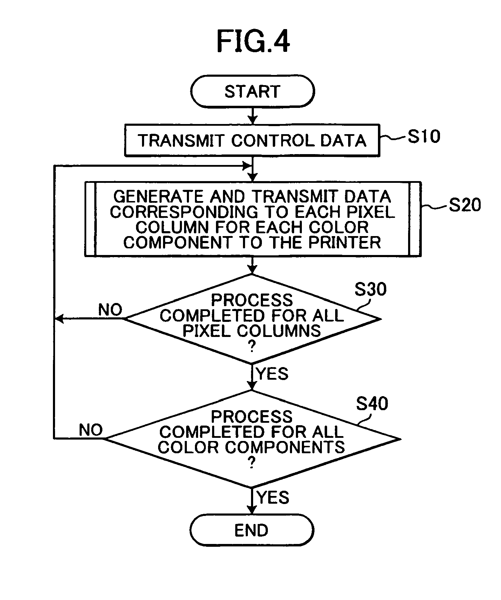

Next, a process for transmitting print data to the printer 1 will be described with reference to Fig. 4. This process is executed by the host computer 2 through a function of the device driver. The process begins when the device driver receives image data for a prescribed image from an application program.

After receiving image data from an application program, the device driver performs a process for converting the color space and a process for calibrating gradations of the image represented by the image data to appropriate gradations for recording in the printer 1, thereby converting image data to image data represented by four gradations (two bits) for each of the C, M, Y, and K color components. In the preferred embodiment, the processes shown in the flowchart of Fig. 4 are those performed after the above conversion. Here, the "process for converting color spaces" is, for example, a process for converting red (R), green (G), and blue (B) color components in the image data to image data having C, M, Y, and K color components according to the CMYK color model when the image data received from the application program employs the RGB color model. The "process for calibrating gradation levels" is a subtractive process or other calibration process that uses an error diffusion technique, for example, to produce appropriate gradation levels to be recorded on the printer 1 when the image data received from the application program renders each color component in multiple gradations. These processes are well known in the art and, therefore, will not be described in detail herein.

At the beginning of the print data transmission process in S10 of Fig. 4, the host computer 2 transmits control data to the printer 1 to notify the printer 1 that print data will be transferred. The control data can specify information related to an image represented by image data that has been generated with the application program (such as the size of the image, color components in the image, and number of color components).

In S20 the host computer 2 generates data corresponding to each pixel column in the paper conveying direction of the image (1^{st} through i^{th} pixel columns (specified by the image data) for each color component of the image (1^{st} through j^{th} color components) based on the image data generated by the application program and transmits this data to the printer 1 as print data. Specifically, the host computer 2 generates pixel group data according to a process described later and transmits this pixel group data sequentially to the printer 1 as print data. The pixel group data specifies pixel groups aligned in the paper conveying direction within the image forming range for each color component of the image specified in the image data when images of each color component is formed on the recording paper. "Images in each color component" denotes data for each of the 1^{st} through j^{th} color components configuring the image specified by the image data (in the preferred embodiment, cyan, magenta, yellow, and black are used as 1^{st} through 4^{th} color components). Further, "pixel groups aligned in the paper conveying direction within the image forming range" denotes columns of pixels that the print head 10 of the printer 1 will form on the recording paper by ejecting ink droplets from specific nozzles 12 (see Fig. 3).

In S30 the host computer 2 determines whether the process of S20 has been performed for all pixel columns. If the determination is NO, the host computer 2 returns to S20. In other words, the process of S20 is sequentially performed for the 1^{st} pixel column through the i^{th} pixel column until the process has been completed for all pixel columns in the image of a specific color component. When the process of S20 has been completed for all pixel columns of the specific color component (S30: YES), then in S40 the host computer 2 determines whether the process of S20 has been completed for all color components. Hence, the processes of S20 and S30 are repeated sequentially for images of the 1^{st} color component through the j^{th} color component, returning to S20 if the process has not been completed for all color components (S40: NO). When the process has been completed for images of all color components (S40: YES), then the print data transmission process ends.

By performing the process described above in S10-S40, the host computer 2 transmits pixel group data for images of the 1^{st} through j^{th} color components to the printer 1 in the order of data corresponding to the 1^{st} pixel column to data corresponding to the i^{th} pixel column.

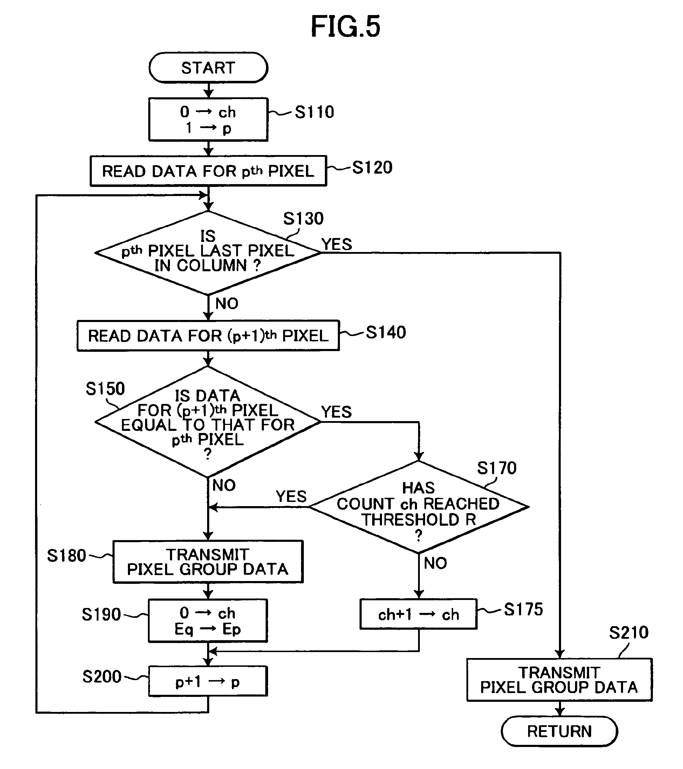

Next, the data transmission process in S20 will be described in detail with reference to Fig. 5. In S110 the host computer 2 initializes a count ch of a counter to 0 and a variable p to 1. The counter counts the number of pixels having the same density component to each other and arranged in series in the following process. In the following description of the process for transmitting print data, "ch" refers to the count value of the counter and "p" the value to which the variable p is set.

In S120 the host computer 2 reads data for the p^{th} pixel from the beginning in a pixel column being processed and sets a variable Ep to the density component indicated in this component. In the present invention, "data for a pixel" denotes the density component (gradation) of the pixel and is expressed with two bits. The variable Ep serves to temporarily hold the data for the p^{th} pixel.

In S130 the host computer 2 determines whether the p^{th} pixel read in S120 is the last pixel in the pixel column (a k^{th} pixel). If the p^{th} pixel is not the last pixel in the column (S130: NO), indicating that there exists data for a (p+1)^{th} pixel, then in S140 the host computer 2 reads data for this (p+1)^{th} pixel and sets a variable Eq to the density component indicated in this data. The variable Eq serves to temporarily hold data for the (p+1)^{th} pixel.

In S150 the host computer 2 determines whether the two density components read in S120 and S140, that- is, the density components set as variables Ep and Eq, are equal (Ep=Eq).

If the density components set as variables Ep and Eq are the same (S150: YES), then in S170 the host computer 2 determines whether the count ch of the counter has reached a prescribed threshold R (the upper limit 63 of six bits in the preferred embodiment).

If the count ch has reached the threshold R (S170: YES), then in S180 the host computer 2 transmits 8-bit data configured of the 6-bit count ch counted thus far and the 2-bit data set as the variable Ep in S120 to the printer 1 as pixel group data specifying one or more pixels. In this embodiment, the host computer 2 transmits the count ch=63 that has reached the threshold R and the density component for the p^{th} pixel from the beginning set as the variable Ep as the pixel group data.

In S190 the host computer 2 resets the count ch and sets the variable Ep to the value of the variable Eq. In S200 the host computer 2 increments the variable p by one and returns to S130.

Further, if the host computer 2 determines in S150 described above that the density components set as variables Ep and Eq are not equal (S150: NO), then the host computer 2 advances directly to S180 to transmit the pixel group data. Subsequently, the host computer 2 resets the count ch and sets the variable Ep to the value of the variable Eq in S190, and increments the variable p in S200, as described above, before returning to S130. In this case, the process performed in S180 is the same as that of when the count ch has reached the threshold R (S170: YES). That is, the host computer 2 transmits data configured of the count ch counted thus far and the density component for the p^{th} pixel from the beginning that is set as the variable Ep as pixel group data.

Further, if the host computer 2 determines in S170 described above that the count ch has not reached the prescribed threshold R (S170: NO), then in S175 the host computer 2 increments the count ch by one, then increments the variable p in S200 before returning to S130.

The host computer 2 processes all pixels in a pixel column by repeatedly performing the steps S130-S200. When the process has been performed for all pixels (S130: YES), then in S210 the host computer 2 transmits data configured of the count ch counted thus far and the density component for the p^{th} pixel from the beginning set as the variable Ep to the printer 1 as pixel group data. Subsequently, the host computer 2 returns to S30 in Fig. 4 described above.

Through the processes of S110-S210, the host computer 2 sequentially transmits pixel for pixel columns being processed to the printer 1. Hence, the sequentially transmitted pixel group data functions as print data for the pixel columns being processed. This transmitted pixel group data indicates the density components and the consecutive number of pixels having these density, components, as indicated by the count ch. Hence, the volume of data is compressed by a run length formula.

Since the process of S110-S210 described above is performed for each pixel column being processed, the count ch of the counter for' counting the consecutive number of pixels with the same density component is initialized in S110 at the beginning of the process for each new pixel column. Accordingly, even if the pixel at the beginning of a pixel column being processed has the same density component as the pixel at the end of the previously processed pixel column, these pixel columns will not be treated as a continuing group of pixels.

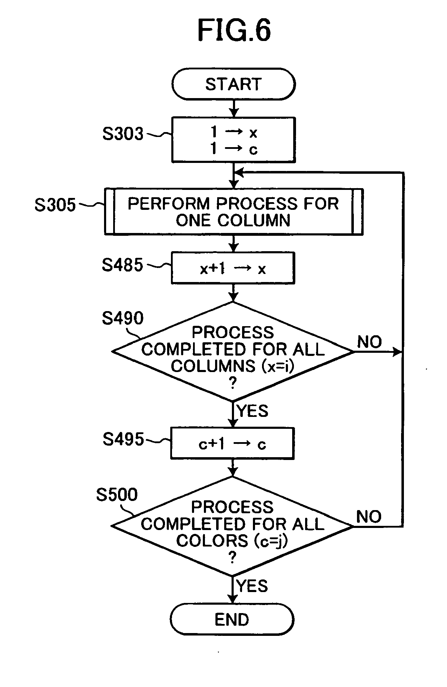

Next, an image generating process will be described with reference to Fig. 6. The image generating process is executed by the printer 1 when the printer 1 has received control data from the host computer 2. After the control data is received, pixel group data is received as print data from the host computer 2 sequentially for each color component of the image to be printed.

At the beginning of the process in S303, the printer 1 initializes variables x and c to 1. In the -following description, "x" denotes the value set to the variable x, while "c" denotes the value set to the variable c.

In S305 the printer 1 performs a process for the x^{th} pixel column in an image for the c^{th} color component for each color component of the image being printed (1^{st} through j^{th} color components). Here, the printer 1 generates droplet data corresponding to the waveform of the drive signal required to drive actuators in the print heads 10 based on the pixel group data in the single pixel column received from the host computer 2 and stores this droplet data in an image buffer. As described above, the pixel group data received from the host computer 2 can specify the density component of pixels in the pixel group and the count ch indicating the number of consecutive pixels at this density (more accurately, the value "ch-1" indicates the number of pixels and is hereinafter referred to as the "run length L"). Therefore, in S305 the printer 1 generates droplet data specifying one pixel worth of data from the density component based on this pixel group data. This process will be described in greater detail later.

In S485 the printer 1 increments the variable x by one. In S490 the printer 1 determines whether the process described above has been completed for all pixel columns of the image in the c^{th} color component. Here, the printer 1 identifies a pixel number k for the number of pixels of the image being printed aligned in the paper conveying direction based on the control data first received in the image data generating process, and determines whether the process has been performed for all pixel columns based on whether the value of the variable x has reached this pixel number k (x=k).

If the process has not been completed for all pixel columns (S490: NO), then the printer 1 returns to S305. However, if -the process has been completed for all pixel columns (S490: YES), then in S495 the printer 1 increments the variable c by one. In S500 the printer 1 determines whether the process described above has been completed for images in all color components of the image being printed. Here, the printer 1 identifies a number j of color components in the image being printed based on the control data first received in the image data generating process, and determines whether the process described above has been completed for images in all color components based on whether the value of the variable c has reached this number j of color components (c=j).

If the process has not been completed for images in all color components (S500: NO), then the printer 1 returns to S305. However, if the process has been completed for images in all color components (S500: YES), then the image generating process ends.

After the process has been completed for images in all color components, the CPU 102 in the printer 1 issues a command to the conveying unit 20 (conveying controller 140) and the print head driver 130 to begin recording the image. Upon receiving this command from the CPU 102, the print head driver 130 begins driving the actuators of the print head 10 according to the drive waveform mapped to data stored in the image buffer, as described above.

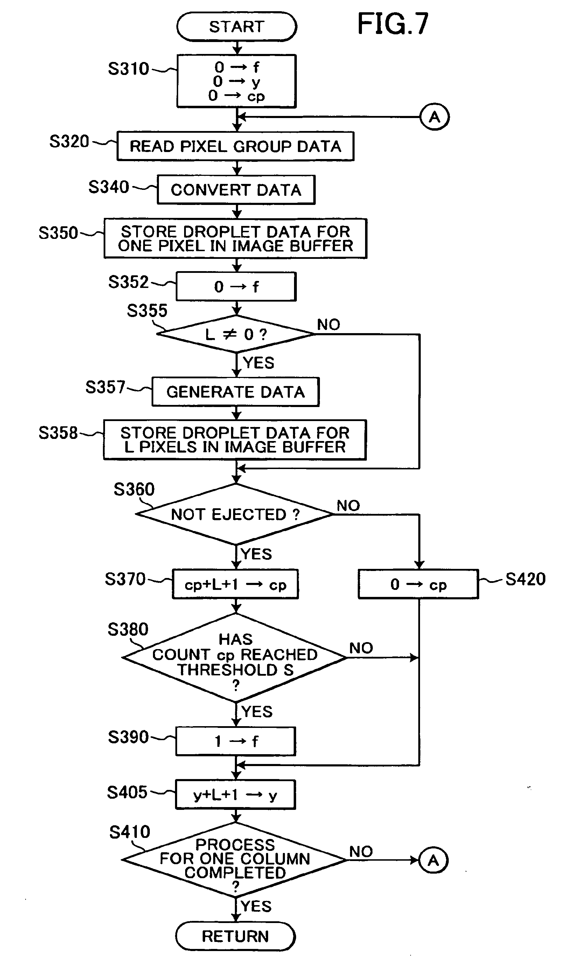

Next, the process performed on one pixel column in S305 will be described in greater detail with reference to Fig. 7. In S310 the printer 1 initializes a flag f, a variable y, and a count cp of a counter to 0. In the following description, "f" and "y" denote the values set to the flag f and variable y, respectively, while "cp" denotes the count value of the counter.

In S320 the printer 1 reads data for one pixel group transmitted from the host computer 2. In this step, the printer 1 identifies a density component E and the count ch designating the number of consecutive pixels having this density component E (hereinafter referred to as the "run length L") based on this pixel group data.

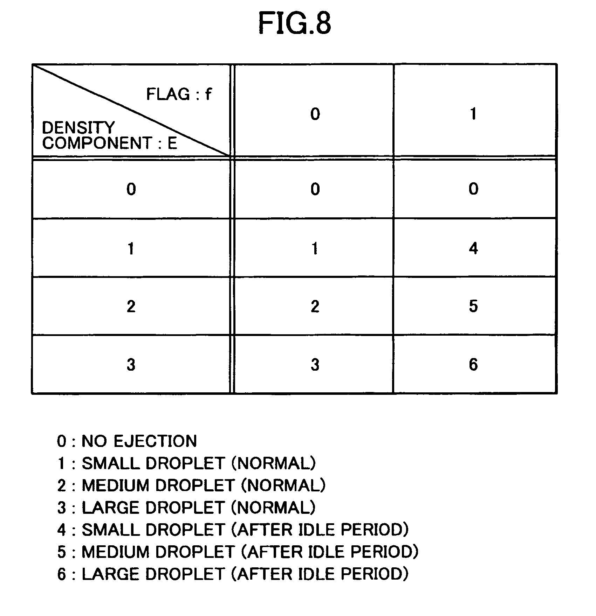

In S340 the printer 1 converts the density component E identified from the pixel group data in S320 to droplet data mapped to the waveform of a drive signal required for driving actuators in the print head 10. In this step, the printer 1 extracts data (0-6) corresponding to the density component E (0-3) in the pixel group data read in S320 and the state of the flag f (0 or 1) from the table shown in Fig. 8, and sets the droplet data for one pixel to the value of this data.

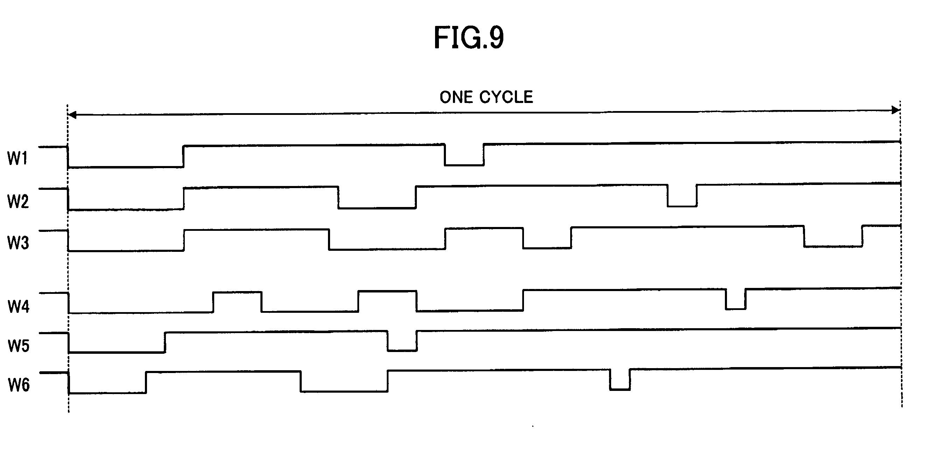

The droplet data specified by values 0-6 stored in the data table designate the waveform of a drive signal required to drive the actuators in the print head 10. Of the values 0-6, only 0 can be extracted regardless of the state of-the flag f. The value 0 is extracted when a drive signal is not to be applied, that is, when an ink droplet is not to be ejected from the nozzle 12. The values 1-3 can be extracted when the flag f is set to 0. A larger value specifies a waveform that generates a larger ink droplet (denser color) to be ejected from the nozzle 12. As will be described later, the flag f is set to 1 only when it is determined that the number of consecutive pixels having the density component of 0 reaches or exceeds a prescribed number, that is, ink droplets have not been ejected from the nozzle 12 for a prescribed number of consecutive pixels or more. Hence, the values 1-3 denote waveforms that should be used during a normal state when the nozzle 12 has been used for ejecting ink droplets more than at any interval less than a prescribed period (see to W1-W3 in Fig. 9). Values 4-6 are extracted when the flag f is set to 1. Like the-waveforms corresponding to the values 1-3, the waveforms corresponding to values 4-6 are set to increase the size of the ink droplets (color density). Since the flag f is set to 1 when it is determined that the nozzle has been idle for more than the prescribed number of pixels without ejecting ink droplets, these values designate waveforms that should be used directly after this idle period (see W4-W6 in Fig. 9). More specifically, the waveforms corresponding to values 4-6 are set so that a desired ink droplet size (equivalent to the size for values 1-3) can be obtained when the nozzle 12 has been idle for a fixed _interval, without being affected by an increased ink viscosity occurring when the nozzle 12 dries. More specifically, when the number of non-ejection times continues for a prescribed number or more, the printer 1 can generate drive waveforms capable of accounting for the drying of nozzles 12 and changes in ink viscosity in order to eject normal ink droplets.

In S350 the printer 1 stores droplet data for one pixel converted in S340 in the image buffer allocated in the RAM 106. Based on the control data first received in the image generating process and the pixel group data received in S320, the printer 1 identifies the color component of the pixel indicated in the pixel group data and the position within the overall image of pixels indicated in the pixel group data. The printer 1 then writes the droplet data found in S340 to a storage area of the image buffer allocated for the identified color component at a position corresponding to the identified position.

In S352 the printer 1 resets the flag f to 0. In S355 the printer 1 determines whether the run length L identified in S320 described above is a value other than 0 (L≠0). When the run length L is a value other than 0, this indicates that the pixel group in the pixel group data read in S320 includes a plurality of consecutive pixels having the same density component.

If the run length L is a value other than 0 (S355: YES), then in S357 the printer 1 generates droplet data for a number of droplets equal to the number of the run length L. Here, the droplet data is extracted from the data table, as in the process of S340, but the printer 1 extracts a waveform for droplet data to be used when the nozzle 12 has been ejecting ink droplets regularly since the flag f was reset to 0 in S352.

In S358 the printer 1 stores the droplet data generated in S357 in the image buffer, as described in S350, and advances to S360. Alternatively, if the printer 1 determines in S355 above that the run length L is the value 0 (S355: NO), indicating that the pixel group data read in S320 does not have consecutive pixels with the same density component, then the printer 1 advances directly-to S360, having generated droplet data based on the pixel group data and written this droplet data to memory for only one pixel worth in S340 and S350.

In S360 the printer 1 determines whether the pixel group data read in S320 is non-ejection data indicating that the print head 10 is not to eject ink droplets from the relevant nozzles. In this step, the printer 1 determines that an ink droplet is not to be ejected when the density component E identified in S320 is 0.

If the printer 1 determines that the pixel group data is non-ejection data (S360: YES), then in S370 the count cp is incremented by one and the value of the run length L. Subsequently, in S380 the printer 1 determines whether the value of the count cp is greater than a prescribed threshold S. In the preferred embodiment, the threshold S is set to 4,032, which is obtained by subtracting the upper limit of 6 bits (63) from the upper limit of 12 bits (4,095).

If the printer 1 determines that the count cp is greater than the threshold S (S380: YES), then in S390 the printer 1 sets the flag f to 1 and advances to S405. However, if the count cp is not greater than the threshold S (S380: NO), then the printer 1 advances to S405 without setting the flag f to 1.

However, if the pixel group data is not non-ejection data (S360: NO), then in S420 the printer 1 resets-the count cp to 0 and advances to S405.

In S405 the printer 1 increments the variable y by one and the run length L. In S410 the printer 1 determines whether the process described above has been completed for all pixel groups constituting one pixel column. In this step, the printer 1 identifies the pixel number k of pixels in the image being printed aligned in the paper conveying direction based on the control data first received in the image data generating processing. The printer 1 determines that the process described above has been completed for all pixel groups constituting a pixel column if the value of the variable y has reached the pixel number k.

If the process described above has not been completed for all pixel groups constituting the pixel column (S410: NO), then the printer 1 returns to S320 and repeats the process between S320 and S410 until the process has been completed for all pixel groups.

However, if the process has been completed for all pixel groups constituting the pixel column (S410: YES), then the printer 1 exits this subroutine and advances to S485 described above.

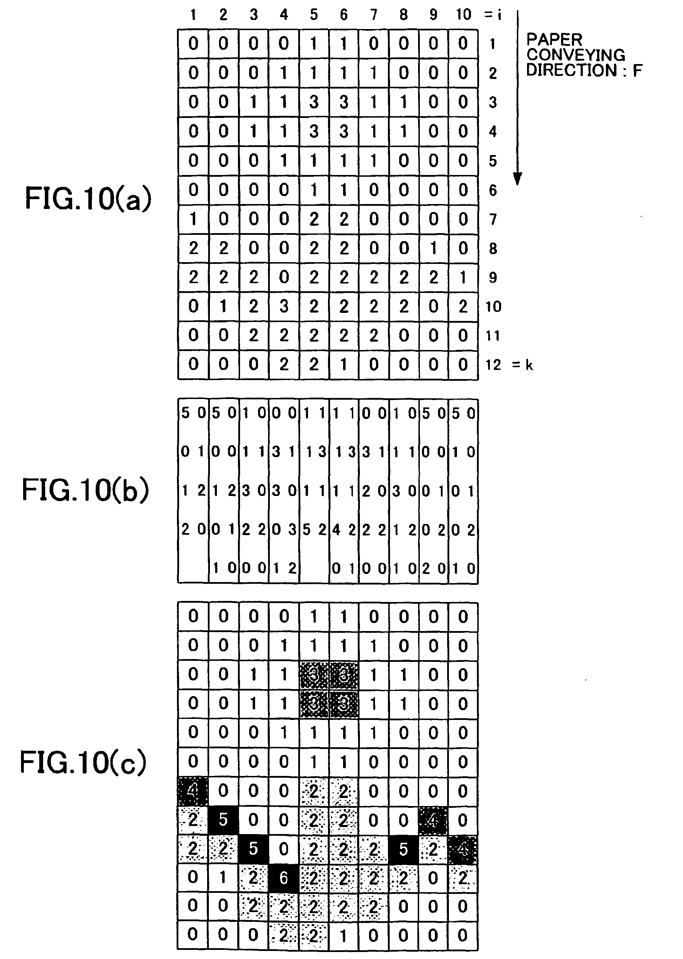

Next, the process performed by the host computer 2 for transmitting print data to the printer 1 will be described in detail, referring to Figs. 10(a) - 10(c). To simplify the description, the image data recorded in this embodiment represents an image including 10 columns and 12 rows (i=10, k=12).

The data shown in Fig. 10(a) indicates an image represented by image data for one color component after the host computer 2 has converted the data from one color space to another and has calibrated the gradation levels. The diagram in Fig. 10(a) maps the density components for each pixel in the image with a numeral. Each box in this grid indicates a single pixel, and the numeral specified in each box (0-3) indicates the density component (gradation) of the pixel. An arrow F in the drawing shows the paper conveying direction.

The drawing in Fig. 10(b) shows data that the host computer 2 produces by converting the image data shown in Fig. 10(a) according to the print data transmission process described above (Fig. 5). In Fig. 10(b), numbers have been assigned as data for the pixels in each pixel column aligned in the paper conveying direction. Each box in this drawing indicates pixel group data for one column, while the numbers in each box specify data which describe pixels in the column in order from top to bottom. For example, the numbers "5 0" occupying the first entry in the first column indicate the values for the count cp and the variable Ep used in the print data transmission process, where the first numeral "5" indicates the count cp while the next numeral "0" indicates the variable Ep.

Next, the print data transmission process performed by the host computer 2 will be described for the image shown in Fig. 10(a). To simplify the description, the threshold R used in the following description will be set to "5". At the beginning of the print data transmission process, data for the first column is processed as follows.

In S110 the host computer 2 initializes the count ch to 0 and the variable p to 1. In S120 the host computer 2 sets the variable Ep to the data for the pixel in the p^{th} row, that is, the first row at this time. As shown in Fig. 10(a), the density component is 0 for the pixel in the first row of this column. Therefore, the variable Ep is set to 0.

Since the p^{th} row is not the last pixel at this time (S130: NO), in S140 the host computer 2 sets a variable Eq to the data for the pixel in the second row at this time, that is, the (p+1)^{th} row. As shown in Fig. 10(a), the density component is 0 for the pixel in the second row. Hence, the variable Eq is set to 0.

In S150 the host computer 2 determines whether the variables Ep and Eq are set to the same value. Since both are set to the value 0 (S150: YES), in S170 the host computer 2 determines whether the count ch has reached the threshold R.

Since the count ch has not reached the threshold R=5 at this time (S170: NO), in S175 the host computer 2 increments the count ch by one (ch=1).

At this time, the host computer 2 increments the variable p by one in S200 (p=2) and returns to S130. Since the p^{th} row, that is, the second row does not indicate the last pixel (S130: NO), in S140 the host computer 2 sets the variable Eq to the data for the pixel in the (p+1)^{th} row, that is, the third row. As shown in Fig. 10(a), the density component E is 0 for the pixel of the third row and, hence, the variable Eq is set to 0.

Since the variables Ep and Eq are still both set to 0 (S150: YES) and the count ch has not yet reached the threshold R (S170: NO), then in S175 the host computer 2 increments the count ch (ch=2).

When there are three consecutive pixels having the same density component in this way, the count ch reflects a value of 2, which indicates that there have been a succession of (ch+1) consecutive pixels with the same density component thus far in the process.

As shown in Fig. 10(a), the density component 0 is recorded six times consecutively in the first column of data beginning from the first row. Accordingly, the process described above will be repeated three more times. As a result of this process, the variable Ep will still be 0, while the count ch will be 5 and the variable p 6.

When performing the process described above for the pixel in the sixth row, in S140 the host computer 2 will set the variable Eq to data recorded for the pixel in the (p+1)^{th}, or seventh, row. Since the density component E is 1 for this pixel, the host computer 2 sets the variable Eq to 1.

Since the variable Ep has been set to 0, corresponding to the first row (through the sixth row), but the variable Eq is now set to 1 (S150: NO), the host computer 2 advances to S180 and transmits pixel group data specifying the count ch and variable Ep to the printer 1. Since the count ch is 5 and the variable Ep 0 at this time, the combination of these values "5 0" are reflected as the first element in the first column of Fig. 10(b).

In S190 the host computer 2 resets the count ch to 0 and sets the variable Ep to the value of the variable Eq. In S200 the host computer 2 increments the variable p by 1 (p=7) and returns to S130. At this time, the variable Ep is set to 1, denoting the data for the pixel in the seventh row.

Subsequently, in S140 the host computer 2 sets the variable- Eq to data recorded in the (p+1)^{th} row, that is, the eighth row at this time. Since the density component E is 2 for the pixel in the eighth row, as shown in Fig. 10(a), the host computer 2 sets the variable Eq to 2.

In S150 the host computer 2 determines that the variable Ep set to 1 is not equal to the variable Eq set to 2 (S150: NO), and in S180 transmits pixel group data specifying the count ch and variable Ep to the printer 1. Since the count ch is 0 and the variable Ep is 1 at this time, the second entry in the first column of Fig. 10(b) reflects the combination of these values "0 1".

When this process has been completed through the eleventh row, the variable p will be set to 12 and the variable Ep will be set to 0, corresponding to the tenth through twelfth rows. Further, the variable Eq will be set to the value 0, corresponding to the (p+1)^{th} row, that is, the twelfth row at this time, and the count ch will be 2.

Accordingly, in S130 the host computer 2 will determine that the pixel in the p^{th} row, that is, the twelfth row is the last pixel (S130: YES), and in S210 will transmit pixel group data specifying the count ch and the variable Ep to the printer 1. Since the count ch is 2 and the variable Ep is 0 at this time, the last entry in the first column of Fig. 10(b) reflects this combination of values ''2 0".

After the host computer 2 has transmitted the pixel group data to the printer 1 in S210, the data process ends for one column worth. After the process has been completed for the first column of data, the following process is performed on the second column of data.

Since the density component is 0 for the first through sixth rows of pixels in the second column, the process of S130-S200 is repeated until the variable p equals 6, as described above for the first column. Subsequently, in S140 the host computer 2 sets the variable Eq to the data 0 in the (p+1)^{th} row, that is, the seventh row at this time. Since the variable Ep is set to the data 0 for the first row (through sixth row) at this time, the variables Ep and Eq are equal (S150: YES), and the host computer 2 advances to S170.

Since the count ch is 5 at this time, the count ch has reached the threshold R (S170: YES). Therefore, in S180 the host computer 2 transmits the pixel group data "5 0" indicated the count ch of 5 and the variable Ep of 0 to the printer 1.

Subsequently in S190, the host computer 2 resets the count ch to 0 and sets the variable Ep to the value of the variable Eq. In S200 the host computer 2 increments the variable p (p=7) and returns to S130. At this time, the variable Ep is set to the data 0 for the pixel in the seventh row.

The next time the process of S140 is performed, the host computer 2 sets the variable Eq to the data in the (p+1)^{th} row, that is, the eighth row at this time. Since the density component is 2 for the pixel in the eighth row, as shown in Fig. 10(a), the variable Eq is set to 2.

Hence, the variable Ep is set to 0, while the variable Eq is set to 2 (S150: NO), and in S180 the host computer 2 transmits pixel group data to the printer 1.

By repeatedly generating and transmitting pixel group data in this way, the host computer 2 produces print data constituting the pixel group data having the values shown in Fig. 10 (b).

Next, the configuration of the print data in the image generating process executed by the printer 1 in Fig. 7 will be described. This description will use the print data transmitted from the host computer 2 in the process described above for Figs. 10(a) and 10(b). For purposes of description, the threshold S used in the following description will be 3.

In this description, the printer 1 processes data corresponding to each pixel column in the pixel group data transmitted sequentially from the host computer 2 as print data. First, a data process corresponding to the first pixel column will be described.

In S310 the printer 1 initializes the flag f, variable y, and count cp to 0. In S320 the printer 1 reads the first entry of pixel group data. The first entry of pixel group data corresponds to the first entry in the first column of Fig. 10(b). This entry indicates a run length L of 5 and a density component E of 0.

In S340 the printer 1 converts the density component E in the pixel group data to droplet data based on the data table shown in Fig. 8. Since the flag f has been initialized to 0, the value 0 corresponding to a flag f of 0 and density component of 0 is extracted from the table and set as the droplet data.

In S350 the printer 1 writes the converted droplet data as one pixel worth of data to an area of the image buffer corresponding to the first column and first row, as shown in Fig. 10(c).

In S352 the printer 1 resets the flag f to 0 (in this case, the flag f remains unchanged at 0). Since the run length L is 5 at this time (S355: YES), in S357 the printer 1 generates droplet data based on the data table (still at the value 0) for a number of entries equivalent to the run length L=5. The printer 1 writes this data as five pixels worth of data in the image buffer at a region corresponding to the second through sixth rows in the first column in Fig. 10(c).

Since the density component is 0 at this time (S360: YES), in S370 the printer 1 adds L+1 to the count cp. In other words, the printer 1 adds 6 for the total number of data entries written to the image buffer in S350 and S358.

Since the count cp is now 6, which is larger than the threshold S=3 (S380 : YES), the printer 1 performs processes in S390 and S405 and advances to S410. Since the process described above has not yet been performed for all pixel groups in the column (the variable y has not reached the pixel number k; S410: NO), the printer 1 returns to S320.

In S320 the printer 1 reads the second data entry of the first column in which the run length L is 0 and the density component E is 1. As described above, the density component E is converted to droplet data in S340 and written to the image buffer in S350 at a region corresponding to the seventh row in the first column in Fig. 10(c). In this case, the droplet data is 4 since the flag f was set to 1 in S390 and the density component E is 1.

In S352 the printer 1 resets the flag f to 0. Since the run length L is 0 at this time (S355: NO), no more data is written to the image buffer.

Further, since the density component E is 1 and not 0 (S360: NO), in S420 the printer 1 resets the count cp to 0. Since the process has still not been completed for all pixel groups (S410: NO), the printer 1 returns again to S320.

In S320 the printer 1 reads the third entry in the first column, in which the run length L is 1 and the density component E is 2. As described above, the density component E is converted to the droplet data 2 in S340 and written as one pixel worth of data to the image buffer in S350. Since the run length L is 1 and not 0 (S355: YES), the printer 1 generates more data in S357 and writes this droplet data in S358. The droplet data is 2 in this case, since the flag f was set to 0 in S352 and the density component E is 2. As a result, the printer 1 writes two pixels worth of data, one entry in each of the steps S350 and S358, to the image buffer in regions corresponding to the eighth and ninth rows of the first column shown in Fig. 10 (c). Subsequently, the printer 1 returns to S320. At this time, the flag f is still set to 0 since the density component E is not 0.

In S320 the printer 1 reads the fourth entry of data in the first column, in which the run length L is 2 and the density component E is 0, and writes three entries of the data 0 to the image buffer at regions corresponding to the tenth through twelfth rows of the first column, as shown in Fig. 10(c). Since the process has now been completed for all pixel groups in this column (the variable y has reached the pixel number k; S410: YES), the process ends for one column worth of data.

Next, the process will be described for data corresponding to the second pixel column. Since the run length L is 5 and the density component E is 0 in the first entry of the pixel group data, the droplet data 0 is written to the image buffer for one pixel and five pixels (a total of six pixels), as in the process described above, at a regions corresponding to the first through sixth rows of the second column shown in Fig. 10(c). At this time, the count cp is 6 and the flag f has been set to 1.

In the second entry of the pixel group data, the run length L is 0 and the density component E is 0. Hence, the droplet data 0 is again written to the image buffer for one pixel at a region corresponding to the seventh row in the second column shown in Fig. 10(c). At this time, the flag f is temporarily reset to 0 in S352. However, since the count cp is 7 (S380: YES), the flag f is again set to 1 in S390.

In the third entry of the data, the run length L is 1 and the density component E is 2. Since the flag f is set to 1, in S350 the printer 1 writes a value of 5 for one pixel as droplet data to the image buffer at a region corresponding to the eighth row in the second column of Fig. 10(c).

Since the run length L is 1 and not 0 at this time (S355: YES), this indicates that more droplet data is to be written to the image buffer. Since the flag f is reset to 0 in S352, the value 2 is extracted from the data table as droplet data and written to the image buffer for one pixel.

At this time, the density component E is 2 and not 0 (S360: NO). Accordingly, the printer 1 returns to S320 after performing processes in S420, S405, and S410, and reads the next data entry.

In the end, the print data shown in Fig. 10 (c) is developed by writing droplet data to the image buffer for all pixel columns.

The above processes as shown in Figs. 4, 5, 6, and 7 are provided to the computer via a storage medium, such as a floppy disk, CD-ROM, or memory card, or via a communication network such as the Internet. The above processes may also be preinstalled on the hard disk or other memory in the computer as a computer-program.

With a printing system of this construction, the host computer 2 generates pixel group data for a plurality of pixel groups as print data. The pixel group data is generated in a time series by processing pixel groups aligned in the paper conveying direction within the image forming range A and provides information for driving specific nozzles 12 in the print head 10. The pixel group data also identifies non-ejection times indicating the number of consecutive times in the pixel group that ink droplets are not ejected from the nozzles 12. By considering the non-ejection times identified in this pixel group data as "information for driving the nozzles 12," the printer 1 itself need not count nor identify the number of non-ejection times, but can drive each nozzle 12 in the print heads 10 with drive waveforms corresponding- to the number of non-ejection times.

Accordingly, in the printing system of the present invention, the host computer 2 generates pixel group data by processing the non-ejection times in each pixel group along a time line using a single counter and transmits this pixel group data sequentially to the printer 1. Upon receiving the pixel group data transmitted sequentially from the host computer 2, the printer 1 can generate image data (S358 of Fig. 7) to drive each nozzle-12 in the print heads 10 using drive waveforms that correspond to information specified in the pixel group data (non-ejection times). Since it is not necessary to provide a counter for each nozzle 12 in the print head 10 in this printing system, the construction described above does not contribute to an increase in the overall printing system, even when the number of nozzles 12 increases.

Further, the pixel group data that the host computer 2 transfers to the printer 1 in S180 of Fig. 3 specifies the density component of pixels in the pixel group and the number of times each density component is found in consecutive pixels (run length L). Accordingly, the printer can easily identify how many times ink droplets should be consecutively ejected at a particular density or how many times ink droplets should not be ejected in succession in order to form groups of pixels specified in the pixel group data, based on the density component of the pixels and the number of ejections or non-ejections indicated in the pixel group data.

Further, the pixel group data specifies the density component of the pixels and the number of times this density component is found in consecutive pixels (run length L) in the pixel group, thereby compressing the volume of data with a run length formula. Accordingly, the volume of this pixel group data is smaller than data that specifies the density component for each pixel in the group, thereby reducing the amount of data that the host computer 2 transmits to the printer 1 and shortening the time required to perform this data transmission.

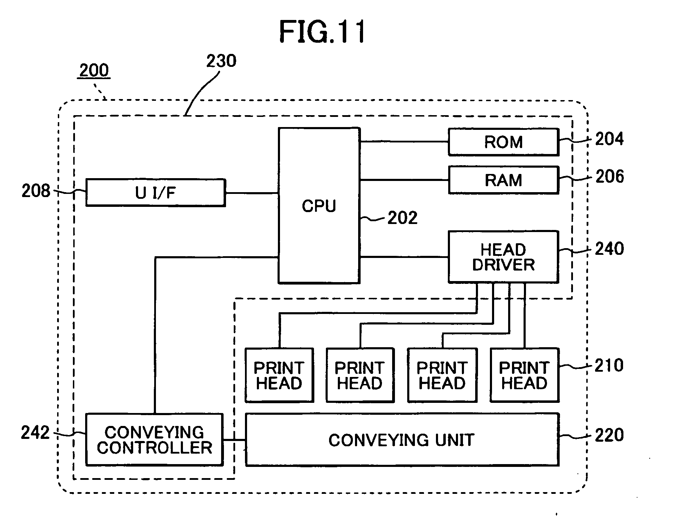

The next description will be made for explaining another preferred embodiment of the present invention. Referring to Fig. 11, a printer 200 is a line head type color inkjet printer and includes four print heads 210 capable of ejecting ink droplets of different colors, a conveying unit 220 for conveying a recording paper so as to pass beneath the print heads 210 and along a nozzle surface thereof, a casing (not shown) in which the print heads 210 and conveying unit 220 are accommodated, a paper tray (not shown) disposed in the bottom section of the casing, and a discharge tray (not shown) provided on the top of the casing.

Each of the print head 210 has the same structure as that of the print head 10 shown in Figs. 2 and 3. The printer 200 further has a control system 230 which is configured of a CPU 202, a ROM 204, a RAM 206, a user interface 208, a print head driver 240, and a conveying controller 242. The CPU 202 controls overall operations of the printer 200. The ROM 204 stores processing programs performed by the CPU 202. The RAM 206 stores results of processed performed by the CPU 202. The user interface 208 includes a control panel and display panel. The print head driver 240 applies a drive signal to actuators in the print head 210. The conveying controller 242 controls how the conveying unit 220 conveys the recording paper.

In this embodiment, the control system 230 of the printer performs all process to treat image data generated by an application program, generate pixel group data related to a plurality of pixels aligned in the paper conveying direction, and print an image on the recording paper, as illustrated in Figs. 4, 5, 6, and 7.

With a printing system of this construction, the control system 230 of the printer 200 generates pixel group data for a plurality of pixel groups as print data. The pixel group data is generated in a time series by processing pixel groups aligned in the paper conveying direction within the image forming range A and provides information for driving specific nozzles 12 in the print head 10. The pixel group data also identifies non-ejection times indicating the number of consecutive times in the pixel group that ink droplets are not ejected from the nozzles 12. By considering the non-ejection times identified in this pixel group data as "information for driving the nozzles 12," the printer 1 itself need not count nor identify the number of non-ejection times, but can drive each nozzle 12 in the print heads 10 with drive waveforms corresponding to the number of non-ejection times.

Accordingly, in the printing system of the present invention, the control system 230 of the printer 200 generates pixel group data by processing the non-ejection times in each pixel group along a time line using a single counter and transmits this pixel group data sequentially to the printer 1. The printer 1 then generates image data (S358 of Fig. 7) to drive each nozzle 12 in the print heads 10 using drive waveforms that correspond to information specified in the pixel group data (non-ejection times). Since it is not necessary to provide a counter for each nozzle 12 in the print head 10 in this printing system, the construction described above does not contribute to an increase in the overall printing system, even when the number of nozzles 12 increases.

Further, the pixel group data generated in S180 of Fig. 3specifies the density component of pixels in the pixel group and the number of times each density component is found in consecutive pixels (run length L). Accordingly, the printer can easily identify how many times ink droplets should be consecutively ejected at a particular density or how many times ink droplets should not be ejected in succession in order to form groups of pixels specified in the pixel group data, based on the density component of the pixels and the number of ejections or non-ejections indicated in the pixel group data.

Further, the pixel group data specifies the density component of the pixels and the number of times this density component is found in consecutive pixels (run length L) in the pixel group, thereby compressing the volume of data with a run length formula. Accordingly, the volume of this pixel group data is smaller than data that specifies the density component for each pixel in the group, thereby reducing the amount of data that the printer 1 has to process and shortening the time required to perform the data process.

For example, in the preferred embodiment described above, after counting the number of non-ejections in S370 of Fig. 7, in S380 the printer 1 determines whether the count cp has reached the threshold S. However, if the host computer 2 is capable of transmitting pixel group data in which the run length L is set to a value greater than or equal to the threshold S, then the printer 1 can be configured to determine whether the number of non-ejections is greater than or equal to the threshold S by comparing the run length L specified in the pixel group data to the threshold S in S380. In such a case, the printer 1 should be configured not to perform the processes for the counter in Fig. 7.

Further, another improved compression method based on the run length method may be used when the host computer 2 compresses pixel group data.

Further, in S20 of Fig. 2 in the preferred embodiment described above, the host computer 2 is configured to transmit pixel group data corresponding to 1^{st} through i^{th} pixel columns in the image for each color component to the printer 1 in sequential order. However, the host computer 2 may be configured to transmit pixel group data for each color component in the following order:
1. Pixel group data corresponding to the first nozzle (first from the left in Fig. 2) in the yellow print head 10,
2. Pixel group data corresponding to the first nozzle in the magenta print head 10,
3. Pixel group data corresponding to the first nozzle in the cyan print head 10,
4. Pixel group data corresponding to the first nozzle in the black print head 10,
5. Pixel group data corresponding to the second nozzle (second from the left in Fig. 2) in the yellow print head 10,
6. Pixel group data corresponding to the second nozzle in the magenta print head 10,
7. Pixel group data corresponding to the second nozzle in the cyan print head 10,
8. Pixel group data corresponding to the second nozzle in the black print head 10, ...,
m. Pixel group data corresponding to the m^{th} nozzle (right side in Fig. 2) in the black print head 10.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

## Claims

1. A printing system comprising:
a host computer (2) that is configured to generate print data for printing on a recording medium and comprises a print data transmitting unit for transmitting the print data; and
a printer (1) capable of performing data communications with the host computer to receive the print data, the printer including a recording head (10) having a plurality of nozzles (12), each of the plurality of nozzles (12) being capable of ejecting an ink droplet to a recording medium which is relatively movable with respect to the recording head (10) in a conveying direction, the plurality of nozzles being aligned in a direction crossing the conveying direction, and a drive signal generating unit that is configured to generate a drive signal to drive the recording head based on the received print data, wherein
the host computer (2) comprises a pixel group generating unit that is configured to generate, based on image data, pixel group data specifying pixel groups to be aligned in the conveying direction within an image forming range of the recording medium, the pixel group data relating to one or a plurality of pixels aligned in the conveying direction and including data indicating a number of consecutive not-ejected pixels in the conveying direction for which an ink droplet is not to be ejected;
the print data transmitting unit is configured to transmit the pixel group data to the printer (1) as the print data; the printing system is **characterized in that**
the drive signal generating unit is configured to generate different respective drive signals for a first pixel for which an ink droplet is to be ejected directly after, in the conveying direction, the number of consecutive not-ejected pixels, and wherein, in use, a drive signal generated for the first pixel depends upon the number of consecutive not-ejected pixels being a prescribed number or more.

2. The printing system according to claim 1, wherein the pixel group data includes a pixel density, a number of consecutive pixels aligned in the conveying direction for which ink droplets are to be ejected with the same respective pixel density to each other, and the number of consecutive non-ejected pixels.

3. The printing system according to claim 1 or 2, wherein the drive signal generating unit has a counter to count the number of consecutive not-ejected pixels, the drive signal has a waveform to make the ink droplet regular when the number of consecutive not-ejected pixels is less than the prescribed number, and the drive signal has another waveform to make the ink droplet larger when the number of consecutive not-ejected pixels is more than or equal to the prescribed number.

4. A printer (1) for printing on a recording medium, comprising:
a recording head (10) having a plurality of nozzles (12), each of the plurality of nozzles (12) being capable of ejecting an ink droplet to a recording medium which is movable relative to the recording head along a conveying direction, the plurality of nozzles being aligned in a direction crossing the conveying direction; and
a drive signal generating unit that is configured to generate a drive signal to drive the recording head based on print data to be printed, the drive signal causing each of the plurality of nozzles to eject or not to eject an ink droplet, thereby to form an image on an image forming range of the recording medium; wherein
a pixel data generating unit that is configured to generate, based on image data, pixel group data specifying pixel groups to be aligned in the conveying direction, the pixel group data relating to one or a plurality of pixels aligned in the conveying direction and identifying a number of consecutive non-ejected pixels aligned in the conveying direction for which an ink droplet is not to be ejected, the number of consecutive non-ejected pixels being determined based on the print data, **characterized in that**
the drive signal generating unit is configured to generate different respective drive signals for a first pixel for which an ink droplet is to be ejected directly after, in the conveying direction, the number of consecutive not-ejected pixels, and wherein, in use, a drive signal generated for the first pixel depends upon the number of consecutive not-ejected pixels being a prescribed number or more.

5. The printer according to claim 4, wherein the drive signal generating unit has a counter to count the number of consecutive not-ejected pixels, the drive signal has a waveform to make the ink droplet regular when the number of consecutive not-ejected pixels is less than the prescribed number, and the drive signal has another waveform to make the ink droplet larger when the number of consecutive not-ejected pixels is more than or equal to the prescribed number.

6. A computer readable medium storing computer executable instructions that when executed by a processor perform the steps of:
generating, based on image data, pixel group data specifying pixel groups to be aligned in a conveying direction within an image forming range of a recording medium, the pixel group data relating to one or a plurality of pixels aligned in the conveying direction and including data indicating a number of consecutive non-ejected pixels aligned in the conveying direction for which an ink droplet is not to be ejected; and
generating a drive signal to drive a recording head to record an image on the recording medium, the recording head having a nozzle to eject or not eject the ink droplet to the one or the plurality of pixels, the drive signal being used to eject the ink droplet through a nozzle, wherein, different respective drive signals are generated for a first pixel for which an ink droplet is to be ejected directly after, in the conveying direction, the number of consecutive not-ejected pixels, the different respective drive signals depending upon the number of consecutive not-ejected pixels being a prescribed number or more.

## Patentansprüche

1. Drucksystem mit:
einem Hostcomputer (2), der aufgebaut ist zum Erzeugen von Druckdaten zum Drucken auf ein Aufzeichnungsmedium und der eine Druckdatenübertragungseinheit zum Übertragen der Druckdaten aufweist; und
einem Drucker (1), der Datenkommunikationen mit dem Hostcomputer zum Empfangen der Druckdaten ausführen kann, wobei der Drucker einen Aufzeichnungskopf (10) mit einer Mehrzahl von Düsen (12), jede der Mehrzahl von Düsen (12) ein Tintentröpfchen zu einem Aufzeichnungsmedium ausstoßen kann, das relativ in Bezug auf den Aufzeichnungskopf (10) in einer Förderrichtung bewegbar ist, die Mehrzahl von Düsen in einer Richtung ausgerichtet ist, die die Förderrichtung kreuzt, und eine Antriebssignalerzeugereinheit, die aufgebaut ist zum Erzeugen eines Antriebssignals zum Treiben des Aufzeichnungskopfs auf Grundlage der empfangenen Druckdaten, enthält,
wobei der Hostcomputer (2) eine Pixelgruppenerzeugereinheit aufweist, die aufgebaut ist zum Erzeugen auf der Grundlage von Bilddaten von Pixelgruppendaten, die Pixelgruppen spezifizieren, die in der Förderrichtung innerhalb eines Bilderzeugungsbereichs des Aufzeichnungsmediums auszurichten sind, wobei die Pixelgruppendaten sich auf ein oder eine Mehrzahl von Pixeln beziehen, die in der Förderrichtung ausgerichtet sind, und Daten enthalten, die eine Zahl von aufeinander folgenden nicht ausgestoßenen Pixeln in der Förderrichtung bezeichnen, für die ein Tintentröpfchen nicht auszustoßen ist;
die Druckdatenübertragungseinheit aufgebaut ist zum Übertragen der Pixelgruppendaten zu dem Drucker (1) als die Druckdaten;
wobei das Drucksystem **dadurch gekennzeichnet ist,**
**dass** die Treibersignalerzeugereinheit aufgebaut ist zum Erzeugen verschiedener entsprechenden Treibersignale für ein erstes Pixel, für das ein Tintentröpfchen auszustoßen ist, direkt in der Förderrichtung nach der Zahl von aufeinander folgenden nicht ausgestoßenen Pixeln, und wobei während der Benutzung ein Treibersignal, das für das erste Pixel erzeugt ist, von der Zahl der aufeinander folgenden nicht ausgestoßenen Pixel abhängt, die eine vorgeschriebene Zahl oder mehr ist.

2. Drucksystem nach Anspruch 1, bei dem die Pixelgruppendaten eine Pixeldichte, eine Zahl von aufeinander folgenden Pixeln, die in der Förderrichtung ausgerichtet sind, für die Tintentröpfchen mit der gleichen entsprechenden Pixeldichte zueinander auszustoßen sind, und die Zahl von aufeinander folgenden nicht ausgestoßenen Pixeln enthalten.

3. Drucksystem nach Anspruch 1 oder 2, bei dem die Antriebssignalerzeugereinheit einen Zähler zum Zählen der Zahl von aufeinander folgenden nicht ausgestoßenen Pixeln aufweist, das Treibersignal eine Wellenform aufweist zum regulären Herstellen des Tintentröpfchens, wenn die Zahl von aufeinander folgenden nicht ausgestoßenen Pixeln kleiner als die vorgeschriebene Zahl ist, und das Treibersignal eine andere Wellenform aufweist zum größeren Herstellen des Tintentröpfchens, wenn die Zahl von aufeinander folgenden nicht ausgestoßenen Pixeln größer oder gleich der vorher beschriebenen Zahl ist.

4. Drucker (1) zum Drucken auf ein Aufzeichnungsmedium, mit
einem Aufzeichnungskopf (10) mit einer Mehrzahl von Düsen (12), wobei jede der Mehrzahl von Düsen (12) ein Tintentröpfchen auf ein Aufzeichnungsmedium ausstoßen kann, das relativ zu dem Aufzeichnungskopf entlang einer Förderrichtung bewegbar ist, die Mehrzahl von Düsen in einer Richtung ausgerichtet ist, die die Förderrichtung kreuzt;
einer Treibersignalerzeugereinheit, die aufgebaut ist zum Erzeugen eines Treibersignals zum Treiben des Aufzeichnungskopfs auf der Grundlage von zu druckenden Druckdaten, wobei das Treibersignal bewirkt, dass jede der Mehrzahl von Düsen ein Tintentröpfchen ausstößt oder nicht, wodurch ein Bild auf einem Bilderzeugungsbereich des Aufzeichnungsmediums erzeugt wird;
wobei eine Pixeldatenerzeugereinheit, die aufgebaut ist zum Erzeugen von Pixelgruppendaten auf der Grundlage von Bilddaten, die Pixelgruppen spezifizieren, die in der Förderrichtung auszurichten sind, wobei sich die Pixelgruppendaten auf eine oder eine Mehrzahl von Pixeln bezieht, die in der Förderrichtung ausgerichtet sind, und eine Zahl von aufeinander folgenden nicht ausgestoßenen Pixeln identifiziert, die in der Förderrichtung ausgerichtet sind, für die ein Tintentröpfchen nicht auszustoßen ist, wobei die Zahl von aufeinander folgenden nicht ausgestoßenen Pixeln auf der Grundlage der Druckdaten bestimmt wird,
**dadurch gekennzeichnet,**
**dass** die Treibersignalerzeugereinheit aufgebaut ist zum Erzeugen verschiedener entsprechender Treibersignale für ein erstes Pixel, für das ein Tintentröpfchen auszustoßen ist direkt nach in der Förderrichtung der Zahl von aufeinander folgenden nicht ausgestoßenen Pixeln, und worin bei Benutzung ein Treibersignal, das für das erste Pixel erzeugt wird, von der Zahl von aufeinander folgenden nicht ausgestoßenen Pixeln abhängt, die eine vorgeschriebene Zahl oder mehr ist.

5. Drucker nach Anspruch 4, bei dem die Treibersignalerzeugereinheit einen Zähler aufweist zum Zählen der Zahl von aufeinander folgenden nicht ausgestoßenen Pixeln, das Treibersignal eine Wellenform aufweist zum regulären Herstellen des Tintentröpfchens, wenn die Zahl von aufeinander folgenden nicht ausgestoßenen Pixeln kleiner als die vorgeschriebene Zahl ist, und das Treibersignal eine andere Wellenform aufweist zum größeren Herstellen des Tintentröpfchens, wenn die Zahl von aufeinander folgenden nicht ausgestoßenen Pixeln größer oder gleich der vorgeschriebenen Zahl ist.

6. Computerlesbares Medium, das computerausführbare Befehle speichert, die, wenn sie durch einen Prozessor ausgeführt werden, die folgenden Schritte ausführen:
Erzeugen von Pixelgruppendaten, die Pixelgruppen spezifizieren, auf der Grundlage von Bilddaten, die in einer Förderrichtung auszurichten sind innerhalb eines Bilderzeugungsbereichs eines Aufzeichnungsmediums, wobei sich die Pixelgruppendaten auf ein oder eine Mehrzahl von Pixeln beziehen, die in der Förderrichtung ausgerichtet sind, und Daten enthalten, die eine Zahl von aufeinander folgenden nicht ausgestoßenen Pixeln bezeichnen, die in der Förderrichtung ausgerichtet sind, für die ein Tintentröpfchen nicht auszustoßen ist; und
Erzeugen eines Treibersignals zum Treiben eines Aufzeichnungskopfs zum Aufzeichnen eines Bilds auf ein Aufzeichnungsmedium, wobei der Aufzeichnungskopf eine Düse aufweist zum Ausstoßen oder nicht Ausstoßen des Tintentröpfchens zu einem oder der Mehrzahl von Pixeln, das Treibersignal benutzt wird zum Ausstoßen des Tintentröpfchens durch eine Düse, wobei verschiedene entsprechende Treibersignale für ein erstes Pixel erzeugt werden, für das ein Tintentröpfchen auszustoßen ist direkt nach in der Förderrichtung der Zahl von aufeinander folgenden nicht ausgestoßenen Pixeln, die unterschiedlichen entsprechenden Treibersignale von der Zahl von aufeinander folgenden nicht ausgestoßenen Pixeln abhängig sind, die eine vorgeschriebene Zahl oder mehr sind.

## Revendications

1. Système d'impression comprenant :
un ordinateur hôte (2) qui est configuré pour générer des données d'impression à imprimer sur un support d'enregistrement et qui comprend une unité de transmission de données d'impression pour transmettre les données d'impression ; et
une imprimante (1) pouvant effectuer des communications de données avec l'ordinateur hôte pour recevoir les données d'impression, l'imprimante comportant une tête d'enregistrement (10) ayant une pluralité de buses (12), chacune de la pluralité de buses (12) pouvant éjecter une goutte d'encre vers un support d'enregistrement qui se déplace relativement par rapport à la tête d'enregistrement (10) dans une direction de transport, la pluralité de buses étant alignées dans une direction croisant la direction de transport, et une unité de génération de signaux de commande qui est configurée pour générer un signal de commande pour commander la tête d'enregistrement sur la base des données d'impression reçues, où
l'ordinateur hôte (2) comprend une unité de génération de groupes de pixels qui est configurée pour générer, sur la base des données d'images, des données de groupes de pixels spécifiant des groupes de pixels à aligner dans la direction de transport dans une plage de formation d'images du support d'enregistrement, les données de groupes de pixels se rapportant à un ou une pluralité de pixels alignés dans la direction de transport et comportant des données indiquant un nombre de pixels non éjectés consécutifs dans la direction de transport pour lequel une goutte d'encre ne doit pas être éjectée ;
l'unité de transmission de données d'impression est configurée pour transmettre les données de groupes de pixels à l'imprimante (1) comme données d'impression ; le système d'impression est **caractérisé en ce**
l'unité de génération de signaux de commande est configurée pour générer différents signaux de commande respectifs pour un premier pixel pour lequel une goutte d'encre doit être directement éjectée après le nombre de pixels non-éjectés consécutifs, dans la direction de transport, et où, en cours d'utilisation, un signal de commande généré pour le premier pixel dépend du nombre de pixels non éjectés consécutifs qui est un nombre prescrit ou plus.

2. Système d'impression selon la revendication 1, où les données de groupes de pixels comporte une densité de pixels, un nombre de pixels consécutifs alignés dans la direction de transport pour lequel des gouttes d'encre doivent être éjectées avec la même densité de pixels respectifs, et le nombre de pixels non éjectés consécutifs.

3. Système d'impression selon la revendication 1 ou 2, où l'unité de génération de signaux de commande a un compteur pour compter le nombre de pixels non éjectés consécutifs, le signal de commande a une forme d'onde pour rendre la goutte d'encre régulière lorsque le nombre de pixels non éjectés consécutifs est inférieur au nombre prescrit, et le signal de commande est une autre forme d'onde pour rendre la goutte d'encre plus grande lorsque le nombre de pixels non éjectés consécutifs est supérieur ou égal au nombre prescrit.

4. Imprimante (1) pour une impression sur un support d'enregistrement, comprenant :
une tête d'enregistrement (10) ayant une pluralité de buses (12), chacune de la pluralité de buses (12) pouvant éjecter une goutte d'encre à un support d'enregistrement qui se déplace par rapport à la tête d'enregistrement le long d'une direction de transport, la pluralité de buses étant alignées dans une direction croisant la direction de transport ; et
une unité de génération de signaux de commande qui est configurée pour générer un signal de commande pour commander la tête d'enregistrement sur la base des données d'impression à imprimer, le signal de commande amenant chacune de la pluralité de buses à éjecter ou à ne pas éjecter une goutte d'encre, pour former ainsi une image sur une plage de formation d'images du support d'enregistrement ; où
une unité de génération de données de pixels qui est configurée pour générer, sur la base des données d'images, des données de groupes de pixels spécifiant des groupes de pixels à aligner dans la direction de transport, les données de groupes de pixels se rapportant à un ou une pluralité de pixels alignés dans la direction de transport et identifiant un nombre de pixels non éjectés consécutifs alignés dans la direction de transport pour lequel une goutte d'encre ne doit pas être éjectée, le nombre de pixels non éjectés consécutifs étant déterminé sur la base des données d'impression, **caractérisé en ce que**
l'unité de génération de signaux de commande est configurée pour générer différents signaux de commande respectifs pour un premier pixel pour lequel une goutte d'encre doit être éjectée directement après le nombre de pixels non éjectés consécutifs, dans la direction de transport, et où, en utilisation, un signal de commande généré pour le premier pixel dépend du nombre de pixels non éjectés consécutifs qui est un nombre prescrit ou plus.

5. Imprimante selon la revendication 4, où l'unité de génération de signaux de commande a un compteur pour compter le nombre de pixels non éjectés consécutifs, le signal de commande a une forme d'onde pour rendre la goutte d'encre régulière lorsque le nombre de pixels non éjectés consécutifs est inférieur au nombre prescrit, et le signal de commande a une autre forme d'onde pour rendre la goutte d'encre plus grande lorsque le nombre de pixels non éjectés consécutifs est supérieur ou égal au nombre prescrit.

6. Support lisible par ordinateur stockant des instructions exécutables par ordinateur qui lorsqu'elles sont exécutées par un processeur effectuent les étapes qui consistent :
à générer, sur la base des données d'images, des données de groupes de pixels spécifiant des groupes de pixels à aligner dans une direction de transport dans une plage de formation d'images d'un support d'enregistrement, les données de groupes de pixels se rapportant à un ou une pluralité de pixels alignés dans la direction de transport et comportant des données indiquant un nombre de pixels non éjectés consécutifs alignés dans la direction de transport pour lequel une goutte d'encre ne doit pas être éjectée ; et
à générer un signal de commande pour commander une tête d'enregistrement pour enregistrer une image sur le support d'enregistrement, la tête d'enregistrement ayant une buse pour éjecter ou ne pas éjecter la goutte d'encre à l'un ou la pluralité de pixels, le signal de commande étant utilisé pour éjecter la goutte d'encre à travers une buse, où, différents signaux de commande respectifs sont générés pour un premier pixel pour lequel une goutte d'encre doit être éjectée directement après le nombre de pixels non éjectés consécutifs, dans la direction de transport, les différents signaux de commande respectifs dépendant du nombre de pixels non éjectés consécutifs d'un nombre prescrit ou plus.
